# EUROPÄISCHE PATENTSCHRIFT

(11) **EP 2 133 156 B1**
(45) Veröffentlichungstag und Bekanntmachung des Hinweises auf die Patenterteilung: **06.07.2011**
(21) Anmeldenummer: 09006733.1
(22) Anmeldetag: 19.05.2009
(51) Int. Cl.: B06B 1/06

(54) **Ultraschallwandler**
Ultrasound converter
Convertisseur d'ultrasons

(30) Priorität: 11.06.2008 DE 102008027687
(43) Veröffentlichungstag der Anmeldung: 16.12.2009
(73) Patentinhaber: Valeo Schalter und Sensoren GmbH, 74321 Bietigheim-Bissingen (DE)
(72) Erfinder: Brunner, Erhard, 86720 Nördlingen (DE); Felber, Franz, 86681 Fünfstetten (DE); Lill, Anton, 74348 Lauffen (DE); Poslowsky, Georg, 74348 Lauffen (DE)

(56) Entgegenhaltungen:
- EP-A2- 0 679 874
- EP-A2- 0 930 607
- DE-A1- 19 601 656
- DE-A1- 19 714 606
- JP-A- 3 270 499
- US-A- 5 176 140

## Beschreibung

Die Erfindung betrifft einen Ultraschallwandler der im Oberbegriff des Anspruchs 1 genannten Art.

Ein derartiger Ultraschallwandler ist bereits aus der DE 196 01 656 A1 für Abstandswarngeräte für Kraftwagen bekannt. Der bekannte Ultraschallwandler umfasst eine topförmige Membran aus Metall sowie eine Piezokeramik, die innenseitig auf den Membranboden geklebt ist. Im Hohlraum der topförmigen Membran ist ein Dämpfungskörper aus Silikonschaum angeordnet, welcher durch einen Silikonstopfen gegen den Boden der Membran vorgespannt ist.

Die als Schwingungsgeber vorgesehene Piezokeramik weist dabei an ihren beiden Breitseiten elektrische Kontaktflächen auf, die jeweils über eine elektrische Verbindung an außerhalb des Membrankörpers angeordnete elektrische Steuerelemente anzuschließen sind. Die vom Membranboden abgewandte Kontaktfläche ist dabei mit einem zugehörigen Kabel verlötet, das über eine Durchtrittsöffnung des Silikonstopfens aus dem Membrangehäuse herausgeführt ist. Die Kontaktierung der gegenüberliegenden, dem Membranboden zugewandte Kontaktfläche erfolgt über den metallischen Membrankörper selbst. Hierzu ist die Piezokeramik über einen elektrisch leitenden Kleber mit der Membran verbunden und an einen Randbereich der Membran ein elektrisches Kabel angelötet.

Die Herstellung dieser Kontaktierung ist verhältnismäßig aufwändig, da die im Hohlraum der Membran angeordneten Lötstellen zur Anbringung der Kabel schlecht zugänglich sind. Ferner kann das frei im Hohlraum des Membrankörpers verlegte Kabel zu Eigenschwingungen angeregt werden, durch welche Störungen der Messsignale hervorgerufen werden können.

Des Weiteren ist aus der EP 0 930 607 A2 ein topförmiger Ultraschallwandler bekannt, dessen Membrankörper aus einem zylindrischen Isolationselement und einem separaten, plattenförmigen Vibrationselement zusammengesetzt ist, wobei auf dem plattenförmigen Vibrationselement ein piezo-elektrischer Schwingungsgeber angeordnet ist. Zur elektrischen Kontaktierung des Schwingungsgebers ist das plattenförmige Vibrationselement mit einer elektrisch leitenden Beschichtung versehen und über eine leitende Klebeverbindung mit einer metallischen Leiterplatte verbunden ist, die in das zylindrische Isolationselement eingebettet ist.

Die EP 0 679 874 A2 beschreibt einen Schallsensor mit einer topfförmigen Membran, auf dessen Membranboden ein Piezoschwingungsgeber angeordnet ist, der über ein Andruckteil gegen den Membranboden gedrückt wird. Zur elektrischen Kontaktierung ist das Andruckteil elektrisch leitend ausgebildet und über eine Kontaktfolie mit der vom Membranboden abgewandten Rückseite des Piezoschwingungsgebers verbunden.

Die DE 197 14 606 A1 betrifft einen Folienwandler zur Anbringung an Außenverkleidungsteilen von Kraftwagen, wobei der Folienwandler auf einer biegsamen Leiterfolie aufgebracht ist, welche elektronische Bauelement trägt.

Aufgabe der Erfindung ist es, einen Ultraschallwandler der im Oberbegriff des Anspruchs 1 genannten Art dahingehend weiterzuentwickeln, dass eine besonders einfache und zuverlässige Bauweise ermöglicht wird.

Diese Aufgabe wird erfindungsgemäß durch die Merkmale des Anspruchs 1 gelöst. Weitere die Erfindung in vorteilhafter Weise ausgestaltende Merkmale enthalten die Unteransprüche.

Der mit der Erfindung erzielte Vorteil besteht darin, dass die elektrische Verbindung des Schwingungsgebers eine elektrisch leitende Beschichtung auf der Membranoberfläche umfasst, die sich zwischen Schwingungsgeber und einem randnahen Anschlussbereich der Membran erstreckt. Somit kann auf die Verlegung oder Anbringung von Kabeln im Hohlraum des Membrankörpers verzichtet werden.

Die elektrisch leitende Beschichtung kann einfach und zuverlässig z. B. durch ein automatisiertes Verfahren aufgebracht werden. Der randnahe Anschlussbereich der Membran ist dann zum Anschluss der elektrisch leitenden Beschichtung an die Spannungsquelle gut zugänglich.

Bei Membranen, die aus einem elektrisch nicht leitenden Material, wie z. B. Keramik oder Kunststoff, hergestellt sind, kann die elektrisch leitende Beschichtung direkt auf der Membranoberfläche aufgebracht sein. Bei Membranen aus elektrisch leitendem Material, wie z. B. Metall, ist zwischen elektrisch leitender Beschichtung und der Membranoberfläche vorzugsweise eine Isolationsschicht angeordnet.

Der Schwingungsgeber ist am Boden der topförmig ausgebildeten Membran angeordnet, wobei die elektrisch leitende Beschichtung sich vom Schwingungsgeber ausgehend entlang der Oberfläche des Membrankörpers bis zum freien Rand der Umfangswand erstreckt.

Die elektrisch leitende Beschichtung kann streifenförmig ausgebildet sein, um bei guter Leitfähigkeit ein einfaches Aufbringen der Beschichtung zu ermöglichen.

Der Schwingungsgeber ist vorzugsweise durch eine Piezokeramik gebildet, wobei die elektrische leitende Beschichtung zur einfachen Kontaktierung eines elektrischen Kontaktbereichs der Piezokeramik vorgesehen ist, welcher auf der von der Membran abgewandten Breitseite der Piezokeramik angeordnet ist.

Die elektrisch leitende Beschichtung kann an eine Leiterplatte angeschlossen sein, die im Anschlussbereich der Membran angeordnet ist. Über diese Leiterplatte lässt sich die elektrisch leitende Beschichtung besonders einfach an die außerhalb des Membrankörpers angeordneten elektrischen Steuerelemente anschließen. Die Leiterplatte lässt sich dabei besonders einfach und zuverlässig unter Zwischenschaltung einer Isolationsschicht an der Membran befestigen.

Die elektrisch leitende Beschichtung kann aus Leitsilber, Leittinte oder einem leitfähigen Polymer hergestellt sein. Derartige Materialien lassen sich im flüssigen Zustand auf die Membranoberfläche auftragen und härten nachfolgend zur elektrisch leitenden Beschichtung aus. Der Auftrag kann dabei besonders zuverlässig und kostengünstig durch ein automatisiertes Verfahren, z. B. durch Aufspritzen erfolgen. Alternativ kann die elektrisch leitende Beschichtung auch durch ein galvanisches Verfahren aufgebracht werden. Hierzu wird die die aus nichtleitendem Material hergestellte oder mit einem nichtleitenden Material beschichtete Membranoberfläche unter Zuhilfenahme einer entsprechenden Maske in einem galvanischen. Bad bereichsweise mit der elektrisch leitenden Beschichtung versehen, wobei zuvor im Bereich der elektrisch leitenden Beschichtung bereits eine dünne Trägerschicht aufgebracht worden sein kann.

Alternativ kann als elektrisch leitende Beschichtung eine dünnwandige Leiterplatte oder Kontaktfolie vorgesehen sein, welche insbesondere durch Klebung einfach und zuverlässig mit der Membranoberfläche verbunden sein kann. Die dünnwandige Leiterplatte oder Kontaktfolie ist dabei vorzugsweise einteilig mit einer Isolationsschicht ausgebildet.

Die zweite elektrische Verbindung (Masseverbindung) zwischen dem Schwingungsgeber und den außerhalb des Membrankörpers angeordneten elektrischen Steuerelementen kann besonders einfach über eine aus elektrisch leitendem Material hergestellte Membran gebildet sein.

Nachfolgend werden Ausführungsbeispiele der Erfindung anhand einer zeichnerischen Darstellung näher erläutert.

In der Darstellung zeigen:
- Fig. 1: einen Ultraschallwandler gemäß einer ersten Aus- führungsform in perspektivischer Schrägansicht,
- Fig. 2: einen Ultraschallwandler gemäß einer zweiten Ausführungsform in einem Längsschnitt und
- Fig. 3: einen Ultraschallwandler gemäß einer dritten Aus- führungsform ebenfalls in einem Längsschnitt.

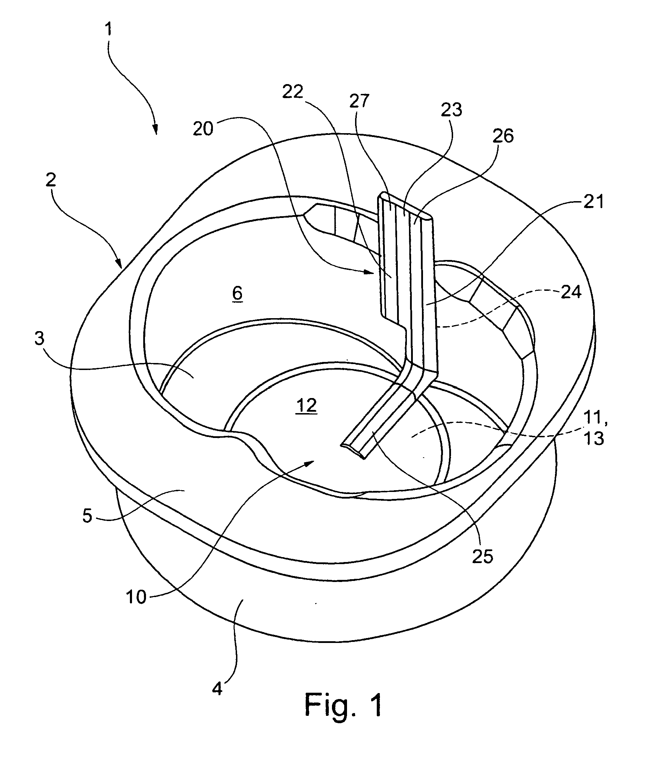

In Fig. 1 ist ein Ultraschallwandler 1 für Abstandsmesseinrichtung von Kraftwagen gezeigt. Der Ultraschallwandler 1 umfasst eine Membran 2 mit einem topfförmigen Membrankörper aus Aluminium, wobei der einteilig ausgebildete Membrankörper einen Membranboden 3 sowie eine zylindrische Umfangswand 4 aufweist, von deren Rand ein ringförmig umlaufender Kragen 5 abgewinkelt ist.

Auf der Membranoberfläche 6 ist auf der Innenseite des Membranbodens 3 eine kreisförmige Piezokeramik 10 angeordnet, deren Breitseiten 11 und 12 jeweils mit einer elektrisch leitenden Beschichtung versehen sind und Kontaktflächen zum elektrischen Anschluss der Piezokeramik 10 bilden. Die dem Membranboden 3 zugewandete Breitseite 11 der Piezokeramik 10 ist über eine elektrisch leitende Klebeschicht 13 im Wesentlichen vollflächig mit einem gegenüberliegenden Mittelbereich des Membranbodens 3 verklebt.

Die Piezokeramik 10 bildet einen elektro-mechanischen Schwingungsgeber, welcher bei Anlegen einer entsprechenden elektrischen Spannung den Membranboden 3 derart in Schwingung versetzt, dass in einem Bereich vor der Membran 2 Ultraschallwellen erzeugt werden. Bei Auftreffen auf ein Hindernis werden die Ultraschallwellen reflektiert und als Echosignal auf den Membranboden 3 zurückgeworfen, wobei das Echosignal den Membranboden 3 in Schwingungen versetzt und hierdurch an der Piezokeramik 10 eine korrespondierende elektrische Spannung erzeugt. Durch Auswertung dieser elektrischen Spannung und des zeitlichen Abstands zwischen Signal und Echosignal lassen sich vor dem Ultraschallwandler angeordnete Hindernisse und deren Entfernungen ermitteln. Die Erzeugung der elektrischen Spannung und die Auswertung des von der Piezokeramik 6 empfangenen Echosignals erfolgt in an sich bekannter Weise über nicht gezeigte, außerhalb des Membrankörpers angeordnete elektrische Steuerelemente.

Zum elektrischen Anschluss der Piezokeramik 10 an die außerhalb des Membrankörpers angeordneten elektrischen Steuerelemente ist eine Kontaktfolie 20 vorgesehen. Die Kontaktfolie 20 umfasst zwei voneinander beabstandete streifenförmige Leiterbahnen 21 und 22 aus einer dünnen metallischen Schicht, wie z. B. Kupfer, die parallel zueinander verlaufen und in eine nichtleitende Matrixfolie 23 aus Kunststoff eingebettet sind. Die nichtleitende Matrixfolie 23 bildet auf der der Membran 2 zugewandten Breitseite der Kontaktfolie 20 eine Isolationsschicht 24. Zusätzlich kann auch an der auf der Membran 2 abgewandten Breitseite der Kontaktfolie 20 eine entsprechende Isolationsschicht vorgesehen sein.

Die dünne Kontaktfolie 20 weist eine an den Membrankörper angepasste Kontur auf und ist mit ihrer Isolationsschicht 24 im Wesentlichen vollflächig über eine nicht gezeigte Klebeschicht aus elektrisch leitendem Kleber mit der Membranoberfläche 6 verklebt.

Die erste Leiterbahn 21 der Kontaktfolie 20 liegt mit einem Endabschnitt 25 an der vom Membranboden 3 abgewandten Breitseite 12 der Piezokeramik 10 an, wobei die Isolationsschicht 24 der Kontaktfolie 20 in diesem Bereich ausgespart und der Endabschnitt 25 der Leiterbahn 21 mittels einer Lötverbindung elektrisch leitend mit der Breitseite 12 der Piezokeramik 10 verbunden ist. Alternativ könnte aber auch eine gebondete Verbindung oder eine Klebeverbindung durch einen elektrisch leitenden Klebstoff vorgesehen sein.

Ausgehend von der Piezokeramik 10 erstreckt sich die Leiterbahn 21 entlang der Oberfläche 6 des Membrankörpers bis zum freien Rand der Umfangswand 4, wobei ein Endabschnitt der Leiterbahn 21 frei vom Membrankörper abragt und einen beidseitig zugänglichen Anschlussbereich 26 bildet, in welchem die Isolationsschicht 24 der Kontaktfolie 20 zumindest bereichsweise ausgespart ist. Der Anschlussbereich 26 ist zum elektrischen Anschluss an ein nicht gezeigtes mit den außerhalb des Membrankörpers angeordneten elektrischen Steuerelementen verbundenes Leitungskabel vorgesehen, wobei der Anschluss über eine Lötverbindung oder auch über eine Steck- oder Klemmverbindung erfolgen kann.

Die zweite Leiterbahn 22 weist ebenfalls einen frei vom Membrankörper abragenden Endabschnitt auf, der einen unmittelbar neben dem Anschlussbereich 26 angeordneten zweiten Anschlussbereich 27 für den Masseanschluss der Piezokeramik 10 bildet. Der zweite Anschlussbereich 27 ist ebenfalls zum elektrischen Anschluss an ein mit den außerhalb des Membrankörpers angeordneten elektrischen Steuerelementen verbundenes Leitungskabel vorgesehen, wobei der Anschluss hier in analoger Weise erfolgen kann.

Im Anschluss an den Anschlussbereich 27 erstreckt sich die Leiterbahn 22 entlang der Membranoberfläche 6 bis zu einem Mittelbereich der Umfangswand 4 des Membrankörpers. Die Isolationsschicht 24 ist dabei im Überdeckungsbereich der zweiten Leiterbahn 22 mit der Membranoberfläche 6 zumindest bereichsweise ausgespart, um eine elektrisch leitende Verbindung der zweiten Leiterbahn 22 zur metallischen Membran 2 und über diese eine elektrische Verbindung zur Kontaktfläche auf der dem Membranboden 3 zugewandete Breitseite 11 der Piezokeramik 12 zu bilden. Alternativ könnte die zweite Leiterbahn 22 entlang der Membranoberfläche 5 bis zur Piezokeramik 12 verlängert und unmittelbar mit deren Breitseite 11 verbunden sein.

Die frei von der Membran 2 abstehenden den Anschlussbereiche 26 und 27 der Kontaktfolie 20 könnten alternativ durch eine entsprechende Abwinklung der Kontaktfolie 20 am ringförmigen Kragen 4 der Membran 2 angeordnet sein.

Bei der Montage des Ultraschallwandlers 1 wird zunächst die Piezokeramik 10 mittels Klebung am Membranboden 3 befestigt. Nachfolgend wird die Kontaktfolie 20 auf die Membranoberfläche 5 geklebt. Vorzugsweise ist die Kontaktfolie 20 dabei selbstklebend ausgebildet. Die Kontaktfolie 20 kann als Formteil ausgebildet sein, das bereits eine an die Kontur des Membrankörpers angepasste Kontur aufweist. Alternativ kann die Kontaktfolie 20 flexibel ausgebildet sein und erst bei der Montage die Kontur des Membrankörpers annehmen.

Nach Aufkleben der Kontaktfolie 20 kann in den Hohlraum des Membrankörpers ggf. noch ein Dämpfungskörper eingeschäumt werden. Alternativ wäre auch ein Einpresse des Dämpfungskörpers möglich, wobei vorzugsweise im Bereich der Kontaktfolie 20 eine entsprechende Randaussparung des Dämpfungskörpers vorzusehen wäre.

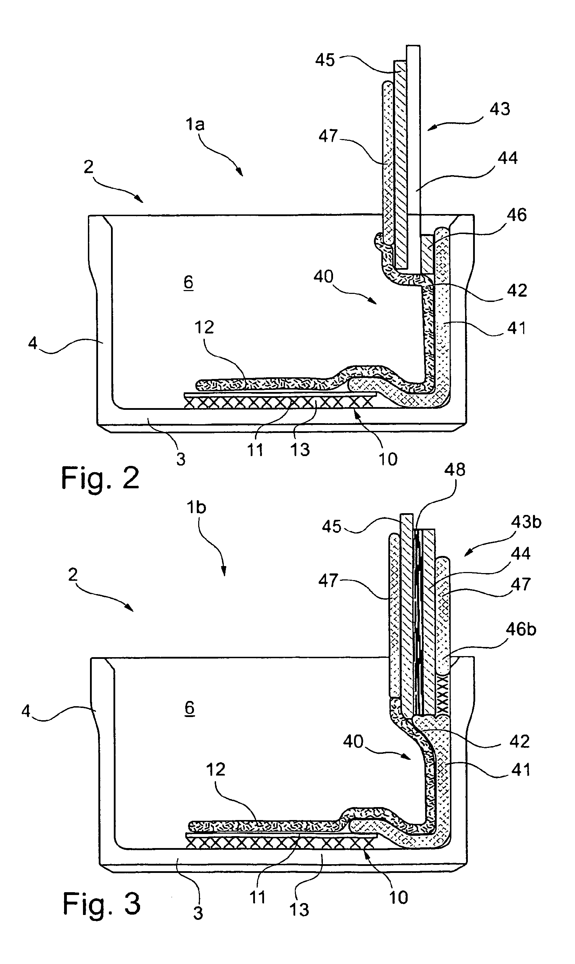

In Fig. 2 ist eine alternative Ausführung eines Ultraschallwandlers 1a gezeigt, bei welcher anstelle der Kontaktfolie 20 eine durch Flüssigkeitsauftrag hergestellte elektrisch leitende Beschichtung vorgesehen ist. Zur Verkürzung der Beschreibung wird nachfolgend lediglich auf die Unterschiede zur Ausführungsform gemäß Fig. 1 eingegangen, wobei gleiche Bauteile mit gleichen Bezugszeichen gekennzeichnet sind.

Beim Ultraschallwandler 1a gemäß Fig. 2 ist zur Kontaktierung der vom Membranboden 3 abgewandten Breitseite 12 der Piezokeramik 10 eine durch Flüssigkeitsauftrag hergestellte Beschichtung 40 auf der Membranoberfläche 5 vorgesehen. Die Beschichtung 40 umfasst eine elektrisch nicht leitende Isolationsschicht 41, welcher durch Auftragen eines geeigneten Materials, insbesondere Kunststoffmaterials, auf die Membranoberfläche 5 hergestellt ist. Die dünne, streifenförmige Isolationsschicht 41 erstreckt sich ausgehend von der Piezokeramik 10 entlang der Membranoberfläche 6 bis zum freien Rand der Umfangswand 4 der Membran 2. Zur Vermeidung von Kurzschlüssen sind ein seitlicher Randbereich der Piezokeramik 10 sowie eine schmaler Randbereich der Breitseite 12 ebenfalls mit der Isolationsschicht 41 beschichtet. Der entsprechende Übergang vom Membranboden 3 lässt sich dabei z. B. durch Auftragen der Isolationsschicht 41 auf die seitlich über die Piezokeramik 10 herausragende Klebeschicht 13 herstellen.

Auf die Isolationsschicht 41 ist eine elektrisch leitende Beschichtung 42 aus Leitsilber, Leittinte oder einem leitfähigen Polymer aufgetragen. Alternativ wären aber auch andere elektrisch leitfähige Materialien denkbar, die sich im flüssigen Zustand auftragen lassen und nachfolgend zu einer festen leitenden Beschichtung aushärten. Die ebenfalls streifenförmig ausgebildete elektrisch leitende Beschichtung 42 weist eine geringere Streifenbreite als die der Isolationsschicht 41, bedeckt einen Flächenbereich der vom Membranboden 3 abgewandten Breitseite 12 der Piezokeramik 10 und erstreckt sich durchgehend auf der Isolationsschicht 41 bis zum freien Rand der zylindrischen Umfangswand 4 der Membran 2. Dort bedeckt die elektrisch leitende Beschichtung 42 einen Randbereich einer Leiterplatte 43.

Die Leiterplatte 43 umfasst eine flexible Trägerplatte 44 aus nicht leitendem Kunststoffmaterial, auf welche eine leitende Kupferbahn 45 aufgebracht ist, wobei die flexible Trägerplatte 44 über eine Klebeverbindung 46 im Bereich der Isolationsschicht 41 an der Membran 2 befestigt ist. Die leitende Kupferbahn 45 ist nach außen hin bereichsweise durch eine Isolationsschicht 47 abgedeckt. Zusätzlich kann die Trägerplatte 44 noch an einem nicht gezeigten Halter abgestützt sein, welcher zur Befestigung des Ultraschallwandlers 1a am Kraftwagen vorgesehen ist.

Die Leiterplatte 43 ragt frei vom Membrankörper ab und ist zum elektrischen Anschluss des Ultraschallwandlers 1a an die mit den außerhalb des Membrankörpers angeordneten elektrischen Steuerelementen beidseitig zugänglich. Alternative wäre es auch möglich, die Leiterplatte 43 an dem in Fig. 2 nicht gezeigten Kragen 5 des Membrankörpers anzuordnen.

Die Kontaktierung der dem Membranboden 3 zugewandeten Breitseite 11 der Piezokeramik 12 erfolgt in üblicher und daher nicht gezeigter Weise über einen elektrischen Anschluss an der Membran 2.

Eine alternative Ausführung des Masseanschlusses zur Kontaktierung der dem Membranboden 3 zugewandeten Breitseite 11 der Piezokeramik 12 ist in Fig. 3 gezeigt. Im Übrigen entspricht diese Ausführung dem Ultraschallwandler 1a gemäß Fig. 2, so dass hier lediglich auf die Unterschiede abgestellt wird. Dabei sind gleiche Bauteile mit gleichen Bezugsziffern gekennzeichnet.

Beim Ultraschallwandler 1b gemäß Fig. 3 ist der Masseanschluss zur Kontaktierung der dem Membranboden 3 zugewandeten Breitseite 11 der Piezokeramik 12 an der Leiterplatte 43b angeordnet. Hierzu weist die flexible Trägerplatte 44 an ihrer zur Kupferbahn 45 gegenüberliegenden Breitseite eine zweite Kupferbahn 48 auf, die über eine elektrisch leitende Klebeverbindung 46b mit der Membranoberfläche 5 verbunden ist. Die Isolationsschicht 41 ist dabei im Bereich der Klebeverbindung 46b ausgespart. Die zweite Kupferbahn 48 ist nach außen hin bereichsweise durch eine Isolationsschicht 47 abgedeckt.

Der elektrisch Anschluss der Ultraschallwandler 1a und 1b an die außerhalb des Membrankörpers angeordneten elektrischen Steuerelementen kann durch eine Löt-, Steck- oder Klemmverbindung der Leiterplatte 43 bzw. 43b mit einem entsprechenden Verbindungskabel erfolgen.

Alternativ könnte der elektrische Anschluss der dem Membranboden 3 zugewandeten Breitseite 11 der Piezokeramik 10 auch über eine zweite elektrisch leitende Beschichtung auf der Membranoberfläche 6 erfolgen, die sich ausgehend vom randnahen Anschlussbereich bis Piezokeramik 10 erstreckt. Die ist insbesondere dann vorteilhaft, wenn der Membrankörper aus einem elektrisch nicht leitenden Material besteht. Alternativ könnte diese zweite elektrisch leitende Beschichtung aber auch auf eine metallische Membran mit oder ohne Zwischenschaltung einer Isolationsschicht aufgebracht werden.

Bei der Herstellung des Ultraschallwandlers 1a und 1b wird zunächst die Piezokeramik 10 auf den Membranboden 3 aufgeklebt. Nachfolgend wird die Isolationsschicht 41, z. B. durch Aufspritzen, auf die Membranoberfläche 6 und einen Randbereich der Piezokeramik 10 aufgebracht. Im nächsten Fertigungsschritt wird die Leiterplatte 43 bzw. 43b über die Klebeverbindung 46 bzw. 46b mit der Membran 2 verklebt. Danach wird die elektrisch leitende Beschichtung 42 durch Auftragen, insbesondere Aufspritzen von Leitsilber, Leittinte oder einem leitfähigen Polymer auf die Isolationsschicht 41 sowie auf angrenzende Randbereiche der Piezokeramik 10 und die Kupferbahn 45 der Leiterplatte 43 bzw. 43b hergestellt. Das Aufspritzen von Isolationsschicht 41 und elektrisch leitender Beschichtung 42 kann dabei besonders zuverlässig und kostengünstig durch ein automatisiertes Verfahren erfolgen.

## Patentansprüche

1. Ultraschallwandler (1) mit einer Membran (2), auf der ein elektromechanischer Schwingungsgeber (10) angeordnet ist, und mit einer elektrischen Verbindung zum elektrischen Anschluss des Schwingungsgebers (10), wobei der topfförmige, einteilig ausgebildete Membrankörper der Membran (2) einen Membranboden (3) sowie eine zylindrische Umfangswand (4) aufweist und wobei der Schwingungsgeber (10) am Boden der topförmig ausgebildeten Membran (2) angeordnet ist,
**dadurch gekennzeichnet,**
**dass** die elektrische Verbindung eine elektrisch leitende Beschichtung (21, 42) auf der Membranoberfläche (6) umfasst, welche sich vom Schwingungsgeber (10) bis zu einer an einem Randbereich der Membran (2) angeordneten Anschlusszone (26, 45) erstreckt, wobei sich die elektrisch leitende Beschichtung (21, 42) ausgehend vom Schwingungsgeber (10) entlang der Oberfläche (6) des Membrankörpers bis zum freien Rand der Umfangswand (4) erstreckt.

2. Ultraschallwandler nach Anspruch 1,
**dadurch gekennzeichnet,**
**dass** zwischen elektrisch leitender Beschichtung (21, 42) und Membranoberfläche (6) eine Isolationsschicht (24, 41) angeordnet ist.

3. Ultraschallwandler nach einem der vorgehenden Ansprüche,
**dadurch gekennzeichnet,**
**dass** der Schwingungsgeber durch eine Piezokeramik (10) gebildet ist, wobei die elektrische leitende Beschichtung (21, 42) an einen auf der von der Membran (2) abgewandten Breitseite (12) der Piezokeramik (10) angeordneten elektrischen Kontaktbereich angeschlossen ist.

4. Ultraschallwandler nach einem der vorgehenden Ansprüche,
**dadurch gekennzeichnet,**
**dass** die elektrisch leitende Beschichtung (42) an eine im Anschlussbereich der Membran (2) angeordnete Leiterplatte (43, 43b) angeschlossen ist.

5. Ultraschallwandler nach Anspruch 4,
**dadurch gekennzeichnet,**
**dass** die Leiterplatte (43, 43b) über eine Klebeverbindung (46, 46b) an der Membran (2) befestigt ist.

6. Ultraschallwandler nach einem der vorgehenden Ansprüche,
**dadurch gekennzeichnet,**
**dass** die elektrisch leitende Beschichtung (42) aus Leitsilber, Leittinte oder einem leitfähigen Polymer hergestellt ist.

7. Ultraschallwandler nach einem der Ansprüche 1 bis 6,
**dadurch gekennzeichnet,**
**dass** als elektrisch leitende Beschichtung eine dünnwandige Leiterplatte oder Kontaktfolie (20) vorgesehen ist.

8. Ultraschallwandler nach Anspruch 7,
**dadurch gekennzeichnet,**
**dass** die Isolationsschicht (24) einteilig mit der dünnwandigen Leiterplatte oder Kontaktfolie (20) ausgebildet ist.

9. Ultraschallwandler nach Anspruch 7 oder 8,
**dadurch gekennzeichnet,**
**dass** die dünnwandige Leiterplatte oder Kontaktfolie (20) durch Klebung mit der Membranoberfläche (6) verbunden ist.

10. Ultraschallwandler nach einem der vorherigen Ansprüche,
**dadurch gekennzeichnet,**
**dass** die Membran (2) eine aus elektrisch leitendem Material hergestellten Membrankörper aufweist, welcher eine zweite elektrische Verbindung zum Anschluss des Schwingungsgebers (Piezokeramik 10) bildet.

## Claims

1. Ultrasonic transducer (1) comprising a membrane (2), on which an electromechanical oscillation transmitter (10) is arranged, and comprising an electrical convection for electrically connecting the oscillation transmitter (10), the pot-shaped membrane body - formed in one piece- of the membrane (2) having a membrane base (3) and also a cylindrical circumferential wall (4), and the oscillation transmitter (10) being arranged at the base of the membrane (2) formed in a pot-shaped fashion,
**characterized**
**in that** the electrical connection comprises an electrically conductive coating (21, 42) on the membrane surface (6), which extends from the oscillation transmitter (10) as far as a connecting zone (26, 45) arranged at an edge region of the membrane (2), the electrically conductive coating (21, 42), proceeding from the oscillation transmitter (10), expending along the surface (6) of the membrane body as far as the free edge of the circumferential wall (4).

2. Ultrasonic transducer according to Claim 1,
**characterized**
**in that** an insulation layer (24, 41) is arranged between the electrically conductive coating (21, 42) and the membrane surface (6).

3. Ultrasonic transducer according to either of the preceding claims,
**characterized**
**in that** the oscillation transmitter is formed by a piezoceramic (10), the electrically conductive coating (21, 42) being connected to an electrical contact region arranged on the broad side (12) of the piezoceramic (10) that faces away from the membrane (2).

4. Ultrasonic transducer according to any of the preceding claims,
**characterized**
**in that** the electrically conductive coating (42) is connected to a printed circuit board (43, 43b) arranged in the connecting region of the membrane (2).

5. Ultrasonic transducer according to Claim 4,
**characterized**
**in that** the printed circuit board (43, 43b) is fixed to the membrane (2) by means of an adhesive connection (46, 46b).

6. Ultrasonic transducer according to any of the preceding claims,
**characterized**
**in that** the electrically conductive coating (42) is produced from conductive silver, conductive ink or a conductive polymer,

7. Ultrasonic transducer according to any of Claims 1 to 6,
**characterized**
**in that** a thin-walled printed circuit board or contact film (20) is provided as the electrically conductive coating.

8. Ultrasonic transducer according to Claim 7,
**characterized**
**in that** the insulation layer (24) is formed in one piece with the thin-walled printed circuit board or contact film (20).

9. Ultrasonic transducer according to Claim 7 or 8,
**characterized**
**in that** the thin-walled printed circuit board or contact film (20) is connected to the membrane surface (6) by adhesive bonding.

10. Ultrasonic transducer according to any of the preceding claims,
**characterized**
**in that** the membrane (2) has a membrane body which is produced from electrically conductive material and which forms a second electrical connection for connecting the oscillation transmitter (piezoceramic 10).

## Revendications

1. Transducteur d'ultrasons (1) comprenant une membrane (2) sur laquelle est disposé un diffuseur d'oscillations (10) électromécanique et comprenant une liaison électrique pour le raccordement électrique dru diffuseur d'oscillations (10), le corps de membrane monobloc en forme de pot de la membrane (2) présentant un fond de membrane (3) ainsi qu'une paroi de pourtour (4) cylindrique et le diffuseur d'oscillations (10) étant monté sur le fond de la membrane (2) en forme de pot,
**caractérisé en ce**
**que** la liaison électrique comprend un revêtement (21, 42) électriquement conducteur sur la surface de la membrane (6), lequel 1 s'étend du diffuseur d'oscillations (10) jusqu'à une zone de raccordement (26, 45) disposée sur une zone de bordure de la membrane (2), le revêtement (21, 42) électriquement conducteur s'étendant à partir du diffuseur d'oscillations (10) le long de la surface (6) du corps de membrane jusqu'au bord libre de la paroi de pourtour (4).

2. Transducteur d'ultrasons selon la revendication 1, **caractérisé en ce qu'**entre le revêtement (21, 42) électriquement conducteur et la surface de la membrane (6) est disposée une couche isolante (24, 41).

3. Transducteur d'ultrasons selon l'une des revendications précédentes, **caractérisé en ce que** le diffuseur d'oscillations est forme par une piézocéramique (10), le revêtement (21, 42) électriquement conducteur étant raccordé à une zone de contact électrique disposée sur le côté large (12) de la piézocéramique (10) à l'opposé de la membrane (2).

4. Transducteur d'ultrasons selon l'une des revendications précédentes, **caractérisé en ce que** le revêtement (42) électriquement conducteur est raccordé à un circuit imprimé (43, 43b) disposé dans la zone de raccordement de la membrane (2).

5. Transducteur d'ultrasons selon la revendication 4, **caractérisé en ce que** le circuit imprimé (43, 43b) est fixé à la membrane (2) par le biais d'une liaison adhésive (46, 46b).

6. Transducteur d'ultrasons selon l'une des revendications précédentes, **caractérisé en ce que** le revêtement (42) électriquement conducteur est réalisé en argent conducteur, en encre conductrice ou en un polymère conducteur,

7. Transducteur d'ultrasons selon l'une des revendications 1 à 6, **caractérisé en ce qu'**un circuit imprimé mince ou un film de contact (20) est prévu comme revêtement électriquement conducteur.

8. Transducteur d'ultrasons selon la revendication 7, **caractérisé en ce que** la couche isolante (24) est formée d'une seule pièce avec le circuit imprimé mince ou le film de contact (20).

9. Transducteur d'ultrasons selon la revendication 7 ou 8, **caractérisé en ce que** le circuit imprimé mince ou le film de contact (20) est assemblé avec la surface de la membrane (6) par collage.

10. Transducteur d'ultrasons selon l'une des revendications précédentes, **caractérisé en ce que** la membrane (2) présente un corps de membrane réalisé dans un matériau électriquement conducteur, lequel forme une deuxième liaison électrique pour le raccordement du diffuseur d'oscillations (piézocéramique 10).
